# EUROPEAN PATENT SPECIFICATION

(11) **EP 2 220 821 B1**
(45) Date of publication and mention of the grant of the patent: **04.09.2019**
(21) Application number: 08857142.7
(22) Date of filing: 19.11.2008
(51) Int. Cl.: H04W 88/04, H04W 16/14, H04W 72/04, H04W 48/08, H04W 48/12, H04W 72/02, H04W 84/18, H04W 74/00

(54) **BEACON RE-BROADCASTING APPARATUS AND METHOD IN WIRELESS NETWORK**
VORRICHTUNG UND VERFAHREN ZUR ERNEUTEN BAKENÜBERTRAGUNG IN DRAHTLOSEM NETZWERK
APPAREIL ET PROCÉDÉ DE REDIFFUSION PAR BALISE DANS UN RÉSEAU SANS FIL

(30) Priority: 07.12.2007 KR 20070126877
(43) Date of publication of application: 25.08.2010
(73) Proprietor: Electronics and Telecommunications Research Institute, Yusong-gu, Daejeon-city 305-350 (KR)
(72) Inventor: KO, Gwangzeen, Seoul 136-073 (KR); SONG, Myung-Sun, Daejeon-city 305-755 (KR); HWANG, Sung-Hyun, Daejeon-city 305-755 (KR); UM, Jung-Sun, Suwon-city Gyeonggi-do 443-370 (KR); KIM, Chang-Joo, Daejeon -city 305-761 (KR); YOU, Sung-Jin, Daejeon-city 300-766 (KR)
(74) Representative: Betten & Resch
(86) International application number: PCT/KR2008/006805
(87) International publication number: WO 2009/072761

(56) References cited:
- EP-A1- 1 533 950
- EP-A2- 1 770 923
- KR-B1- 100 541 641
- US-A1- 2005 128 991
- US-A1- 2005 169 292
- US-A1- 2007 206 628
- US-A1- 2007 218 921
- US-A1- 2007 263 572
- 'Wireless and Mobile Communications, 2007. ICWMC '07. Third International Conference on, 4-9 March 2007', 04 March 2007 article LIANG CHENG ET AL.: 'Efficient Channel Reservation for Multicasting GTS Allocation and Pending Addresses in IEEE 802.15.4', pages 1 - 6, XP031065966

## Description

### Technical Field

The present invention relates to a beacon re-broadcasting apparatus, a beacon re-broadcasting method, and an initial access request method using an echo beacon protocol (EBP) in a wireless network, and more particularly, to a beacon re-broadcasting apparatus, a beacon re-broadcasting method, and an initial access request method, capable of sharing and effectively using frequency resources between networks through beacon re-broadcasting and maximizing convenience and efficiency in network operation.

The present invention is derived from a research project supported by the Information Technology (IT) Research & Development (R&D) program of the Ministry of Information and Communication (MIC) and the Institute for Information Technology Advancement (IITA) [2005-S-002-03, Development of Cognitive Radio Technology for Efficient Spectrum Utilization].

### Background Art

Conventional wireless personal area networks (WPANs) such as in IEEE 802.15.1.3, and 4 use operation frequencies of corresponding systems, which are allocated by governments of particular countries in advance, so that finding and managing frequencies to be operated by the WPANs are not important.

However, in a state where a system that is not allocated with a specific frequency band from the government but is granted with using a frequency at a predetermined band (for example, TV band) from the government operates in advance, in a PAN based on a cognitive radio technology in which an incumbent user (IU) continuously scans corresponding frequencies to find and use a frequency that is not used by the IU at a particular time period, unlike in the existing PAN, strict power control is required so that an operation frequency is set at an initial structure of a network and the IU is not interfered.

US 2007/263572 A1 discloses an apparatus and method of a mobile access node selecting a data transmission rate. The method includes the mobile access node receiving beacons from a plurality of wireless clusters, each beacon advertising a data transmission rate a gateway of the wireless cluster that originates the beacon, identifying at least one qualified routing path, the at least one qualified routing path including a best quality routing path, and other routing paths having a quality within a predetermined margin of the best quality routing path, and selecting the data transmission rate of the mobile access node to be the lowest data transmission rate advertised by beacons of the at least one qualified routing path.

US 2007/218921 A1 discloses a method of joining a cell by using a proxy coordinator. The method of joining a cell by using a proxy coordinator includes requesting a second device to operate as a proxy coordinator from a first device positioned out of a beacon frame reachable area of the cell, transmitting a time period to operate as the proxy coordinator allocated by a coordinator of the cell, informing the first device that the second device can operate as the proxy coordinator, transmitting a cell join request to the proxy coordinator from the first device through the second device, and transmitting a beacon frame including time allocation information from the coordinator to the first device through the second device.

EP 1770923 A2 discloses a method for initializing a wireless network which includes discovering at least one node of the wireless network that is within hearing range of a base station of the wireless network, authenticating the at least one discovered node, assigning a node identifier to the at least one discovered node, and selecting a network frequency, at least one backup frequency, and a locally unique network identifier.

### Disclosure of Invention

### Technical Problem

The aforementioned limitations in the PAN based on a cognitive radio technology, result in strict limitations on a range of beacon signals for determining a coverage of the network, and the beacon signal cannot be received in a particular region. Accordingly, many problems such as the need of exchanges of cognitive radio information such as frequency usage information between networks, a problem of acquiring a network beacon outside a transmission range in a power controlled state, a problem of setting an initial transmission power, and a problem about a device that exists in an overlap area between a plurality of networks and cannot properly receive beacons, occur.

### Technical Solution

The invention made is disclosed in the attached independent claims. Further embodiments are disclosed in the attached set of dependent claims.

The present invention provides a beacon re-broadcasting apparatus and a beacon re-broadcasting method capable of sharing and effectively using frequency resources between networks by using an echo beacon protocol (EBP) in a wireless network and maximizing convenience and efficiency in network operation.

### Advantageous Effects

Accordingly, many problems that occur due to beacon power transmission control in a PAN such as the need of exchanges of cognitive radio information such as frequency usage information between networks, a problem of acquiring a network beacon outside a transmission range in a power controlled state, a problem of setting an initial transmission power, and a problem about a device that exists in an overlap area between a plurality of networks and cannot properly receive beacons, can be solved. Therefore, the beacons can be received in various environments and beacons in an adjacent external network in addition to a corresponding network can be received. In addition, frequency resources between the networks can be shared and effectively used, and convenience and efficiency in network operation can be maximized.

### Description of Drawings

The above and other features and advantages of the present invention will become more apparent by describing in detail exemplary embodiments thereof with reference to the attached drawings in which:
FIGS. 1A to 1D are views illustrating situations in which problems in that a terminal does not receive a beacon in a wireless network based on a cognitive radio technology;
FIG. 2 is a view illustrating a structure of a beacon re-broadcasting apparatus in a wireless network according to an embodiment of the present invention;
FIG. 3 is a flowchart of a beacon re-broadcasting method used in the wireless network according to the embodiment of the present invention;
FIG. 4 is a view illustrating a structure of a superframe used in the wireless network according to the embodiment of the present invention;
FIG. 5 is a flowchart of an initial access request method used in the wireless network;
FIG. 6 is a view illustrating operations of solving the initial access problem ;
FIG. 7 is a flowchart of an initial access request method used in a wireless network;
FIG. 8 is a view illustrating operations of solving the overlap area problem according to another embodiment; and
FIG. 9 is a view illustrating operations of solving an initial interference problem according to another embodiment.

### Best Mode

A beacon re-broadcasting apparatus in a wireless network in which a plurality of terminals communicate with each other through a superframe including time-divided time slots, including: a beacon frame receiver receiving, from a management device managing the wireless network, a beacon frame including beacon information for communications in the wireless network and information on an echo beacon slot allocated for beacon re-broadcasting among the time slots of the superframe; and a beacon re-broadcaster rebroadcasting the beacon information during the echo beacon slot.

A beacon re-broadcasting method in a wireless network in which a plurality of terminals communicate with each other through a superframe including time-divided time slots, including: a beacon frame reception operation of receiving, from a management device managing the wireless network, a beacon frame including beacon information for communications in the wireless network and information on an echo beacon slot allocated for beacon re-broadcasting among the time slots of the superframe; and a beacon re-broadcasting operation of rebroadcasting the beacon information during the echo beacon slot.

An initial access request method used in a wireless network in which a plurality of terminals communicate with each other through superframes including time-divided time slots, including: receiving beacon information including information on a CAP slot for initial access to the wireless network among the time slots of the superframe from a terminal in the wireless network; and transmitting an initial access request message for requesting initial access to the wireless network during the CAP slot.

An initi al access request method used in a wireless network in which a plurality of terminals communicate with each other through a superframe including time-divided time slots, including: receiving first beacon information including information on a CAP slot for initial access to a first wireless network among the time slots of the superframe in the first wireless network from a terminal that belongs to the first wireless network; receiving second beacon information on a frequency channel used in a second wireless network and information on each of the time-divided time slots from one or more of a management device in the second wireless network and terminals that belong to the second wireless network; and transmitting an initial access request message for requesting initial access to the first wireless network during the CAP slot of the first wireless network that is determined not to affect the second wireless network on the basis of the second beacon information.

### Mode for Invention

The principle of the present invention is exemplified. Therefore, those skilled in the art can invent various apparatuses that implement the principle of the present invention and are included in the concept and range of the present invention although the apparatuses are not described in detail and illustrated in the specification. In addition, it should be noted that all conditional terms and embodiments provided in the specification are intended only for purpose of providing a sufficient understanding of the present invention and are not limited to embodiments and states provided in the specification. In addition, all the descriptions providing particular embodiments in addition to the principles, aspects, and embodiments of the present invention are intended to include structural and functional equivalents. In addition, the equivalents include equivalents that will be developed, that is, any device invented to perform the same function regardless of a structure, in addition to published equivalents.

Therefore, functions of various units illustrated in the drawings such as processors or function blocks displayed to have similar concepts may be used for dedicated hardware and hardware capable of executing associated software. When the functions are provided by the processors, the functions may be provided by a single dedicated processor, a single shared processor, or a plurality of individual processors, and parts of those may be shared. In addition, the use of terms such as processors, controls, or terms introduced to have similar concepts may not be construed to exclude hardware capable of executing associated software; rather, the use thereof implicitly includes the use of digital signal processors (DSP) hardware, read-only memory (ROM), random-access memory (RAM), and a non-volatile memory for storing the software. Other hardware in old combinations may be included.

Exemplary embodiments of the present invention will now be described in detail with reference to the accompanying drawings. In the description, the detailed descriptions of well-known functions and structures may be omitted so as not to hinder the understanding of the present invention. Like reference numerals designate like elements throughout the specification.

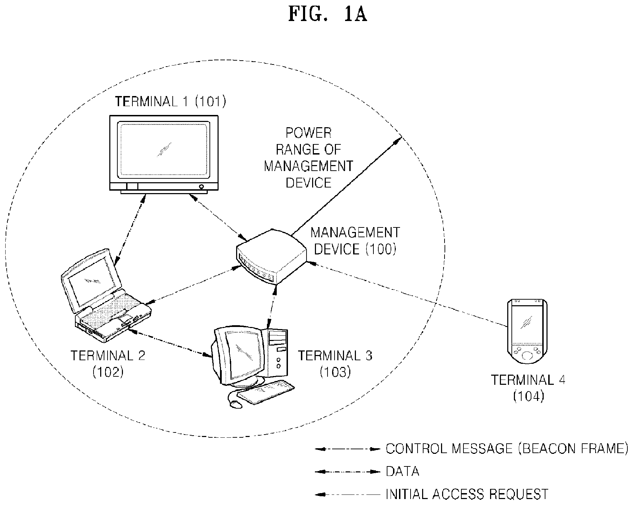

1. FIGS. 1A to 1D are views illustrating situations in which problems in that a terminal does not receive a beacon and cannot request an initial access or a terminal generates an interference in an adjacent network, in a wireless network based on a cognitive radio technology.
1. Since an existing communication system uses permitted frequencies, a management device for controlling and managing a network transmits a beacon frame in an allocated frequency range, and terminals (devices) that cannot receive the beacon frame are not provided with services or the terminal generates a new network by functioning as a management device for the new network.

However, a wireless personal area network (WPAN) based on a cognitive radio technology has limitations to transmit a beacon frame.

First, there is uncertainty of a frequency band for transmitting the beacon frame. This is because an incumbent user (IU) searches for a particular frequency that is not used to set a new network in the searched frequency. In this case, it is more difficult for terminals that are to be connected to the set network to search for the frequency in which the network is set as compared with a conventional system.

Second, in order for the management device to transmit the beacon frame, due to characteristics of the cognitive radio system that implicitly assumes that an IU operates around a network, the management device has to be designed to reduce an interference in the IU as much as possible. Therefore, in order to reduce the interference, power to transmit the beacon frame is controlled, and at this time, the transmission power has to be controlled so that only terminals connected to the network are properly provided with services. This causes a decrease in a network coverage, so that hidden nodes that cannot receive the beacon frame transmitted by the management device exist in a larger area.

Last, if there is no effective information exchange between adjacent networks for frequency usages, the networks use the same frequency. In this case, a new terminal in the overlap area receives signals in the two networks simultaneously, so that the terminal in a corresponding network region cannot properly receive the beacon frame.

Referring to FIG. 1A, a management device 100 transmits a beacon frame in a state where power is controlled so that terminals 1 to 3 101 to 103 have a minimum power range to receive the beacon frame. Here, a terminal 4 104 that is outside the minimum power range but wants to access to the wireless network cannot receive the beacon frame transmitted from the management device. Therefore, an initial access problem in which the terminal 4 cannot request an initial access of the management device occurs.

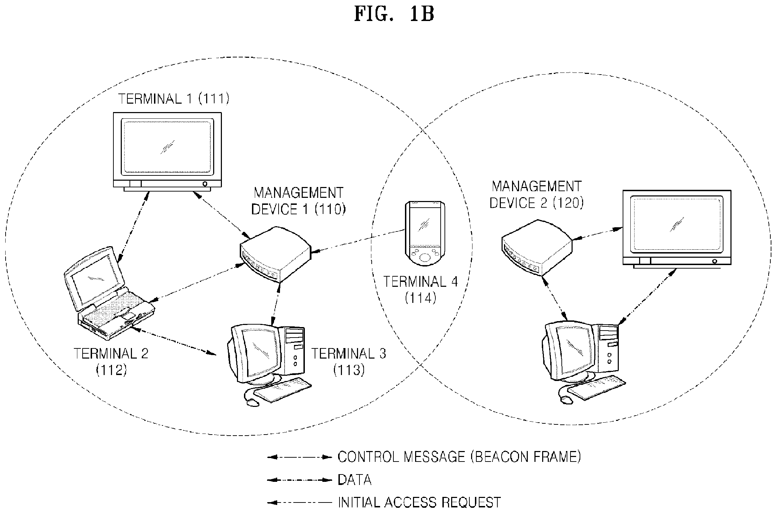

Referring to FIG. 1B, when adjacent two networks use the same frequency, a terminal 4 114in an overlap area between the two networks may simultaneously receive the beacon frames transmitted from management devices 110 and 120 in the two networks and cannot properly receive the beacon frames. Particularly, when a signal of an adjacent network is periodically transmitted at time points at which the beacon frame of the network that is to access to is transmitted and a collision occurs, an overlap area problem in that the beacon frame of the network that is to access to cannot be received before a transmission period of one of the two networks is changed, occurs.

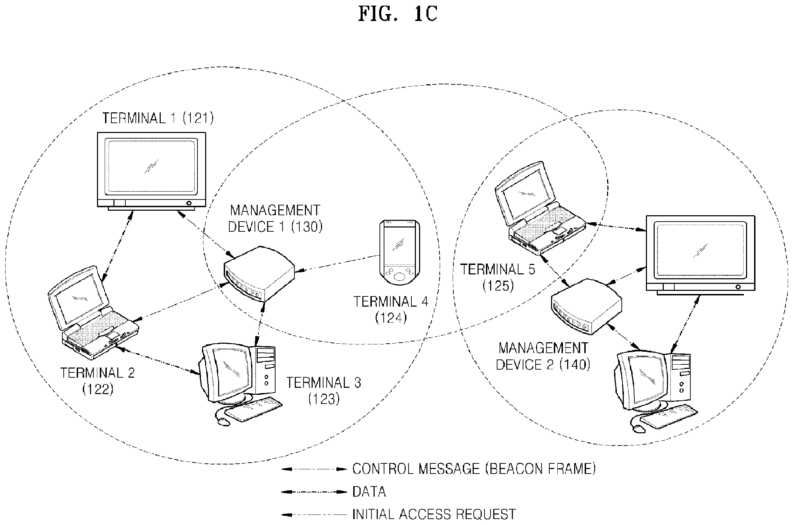

Referring to FIG. 1C, when a terminal 4 124 does not recognize an existence of a terminal 5 125 and requests an initial access of a management device 1 130 through a time slot that generates a collision with a transmission period of a signal of the adjacent network, an initial interference problems in that an interference in the adjacent network is generated occurs.

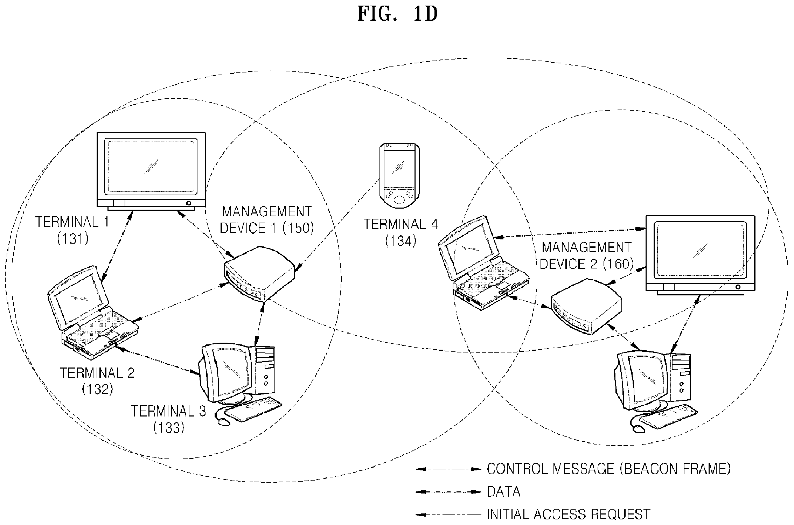

Each of the problems in the aforementioned three cases affects the networks. In addition, as illustrated in FIG. 1D, the problems may simultaneously occur, and in this case, it results in more complex problems.

Referring to FIG. 1D, a terminal 4 134 that is outside a transmission range of a management device 1 150 cannot receive a beacon frame from the management device 1 150, and an initial access problem in that the terminal 4 134 cannot request an initial access of the management device 1 150. In addition, the terminal 4 134 does not know beacon information on an adjacent network, so that the terminal 4 134 may generate the initial interference problem in that the terminal 4 134 generates the interference in the adjacent network.

A management device 2 160 generates an interference on the management device 1, so that the management device 2 160 may raise a serious problem to a network of the management device 1.
1. This shows that the two problems illustrated in FIG. 1A and 1C may simultaneously occur.

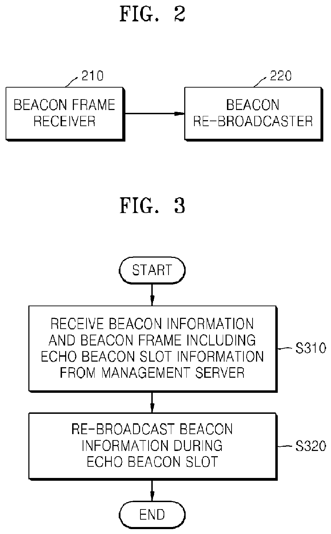

FIG. 2 is a view illustrating a structure of a beacon re-broadcasting apparatus in a wireless network according to an embodiment of the present invention. FIG. 3 is a flowchart of a beacon re-broadcasting method performed by the beacon re-broadcasting apparatus in the wireless network illustrated in FIG. 2.

Referring to FIG. 2, the beacon re-broadcasting apparatus in the wireless network according to the current embodiment includes a beacon frame receiver 210 and a beacon re-broadcaster 220.

The beacon frame receiver 210 receives, from a management device for managing a wireless network in which a plurality of terminals communicate with each other through superframes including time-divided time slots, a beacon frame including beacon information for communication in the wireless network and information on an echo beacon slot allocated for beacon re-broadcasting in the time slots of the superframe in operation S310.

The wireless network according to the current embodiment indicates a network in which a management device (or coordinator) performs transmission power control, such as a PAN based on the cognitive radio technology. Therefore, although not based on the cognitive radio technology, a system in which a network coordinator such as an access point (AP) in IEEE 802.11 or a piconet coordinator (PNC) in IEEE 802.15 performs the transmission power control may apply the current embodiment.

Here, the beacon information includes information on a location and a length on the superframe, a modulation scheme, a coding scheme, and an allocated terminal for each of the time-divided time slots. Moreover, the beacon information may further include information on a backup channel that can be used when a problem of a frequency channel used for a wireless network to perform a cognitive radio function or a frequency channel that is being used occurs, and information on a quiet period (QP) used to search for an appearance of an IU in the frequency channel that is being used.

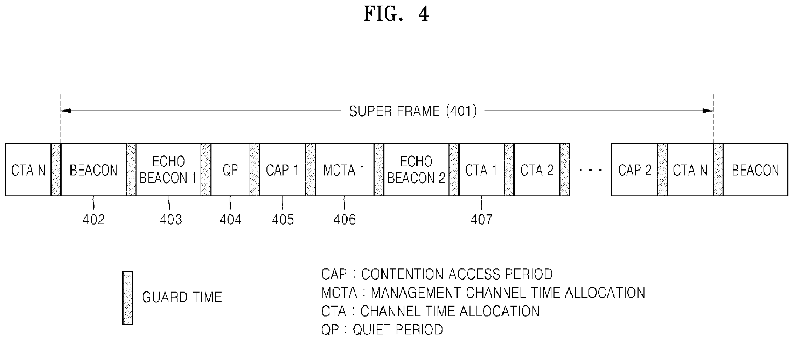

FIG. 4 is a view illustrating a structure of the superframe used in the wireless network according to the embodiment of the present invention.

Referring to FIG. 4, the superframe 401 includes time slots such as a channel time allocation (CTA) slot 407, a management channel time allocation (MCTA) slot 406, a contention access period (CAP) slot 405, a QP slot 404 for searching for a signal of an IU in a cognitive radio technology, a beacon slot 402, an echo beacon slot (EBP) slot 403, and the like.

The CTA slot is a slot for communications between a plurality of terminals, the MCAT slot is a slot for transmission/reception of control information between a management device and the terminals, and the CAP slot is a slot for transmission and initial access of data with a small length.

In addition, the QP slot is a slot for searching for the signal of the IU without its interference in its operation frequency in order to support the cognitive ratio function.

In addition, the beacon slot is a slot for transmitting a beacon frame from the management device to each terminal.

In addition, the EBP slot is a slot for beacon re-broadcasting from the terminals according to the current embodiment. The EBP slot operates in two modes. There are a relay mode and a coexistence mode. The EBP slot in the relay mode (hereinafter, referred to as a relay mode beacon slot) is a slot for re-broadcasting to an adjacent terminal in the same wireless network, and the EBP slot in the coexistence mode (hereinafter, referred to as a coexistence mode beacon slot) is a slot for re-broadcasting to an adjacent external terminal that does not belong to the wireless network to which the terminal belongs.

In the structure of the superframe according to the current embodiment, the EBP slots are allocated to a plurality of time slots separated from each other. Specifically, the EBP slots are separated from each other in the time domain so that the adjacent terminal in the same wireless network or the adjacent external terminal can keep away from an interference source operating in an adjacent network or in a specific time period and receive the beacon. In addition, the CAP slots for transmitting a signal to the management device by a terminal are allocated to a plurality of time slots separated from each other so that the CAP slots can avoid affects from the adjacent network and can be selected in the time domain.

The beacon re-broadcaster 220 extracts information on the echo beacon slot from the beacon frame received by the beacon frame receiver 210 and re-broadcasts beacon information during the extracted echo beacon slot in operation S320. In the description, in order to distinguish the beacon information re-broadcasted by the terminal during the echo beacon slot from the beacon frame transmitted by the management device, the re-broadcasted echo beacon is called an echo beacon.

In this case, when the entire beacon frame is re-broadcasted, redundant information may be re-broadcasted, and this causes an unnecessary overhead. Therefore, in order to reduce the overhead, parts of the information included in the beacon frame are re-broadcasted. The parts to be re-broadcasted in the relay and coexistence modes are different from each other.

The beacon re-broadcaster 220 transmits information on a location and a length on the superframe, a modulation scheme, a coding scheme, an allocated terminal, an the like for each of the time-divided time slots among the beacon information to an adjacent terminal in the wireless network, during the relay mode beacon slot of the echo beacon slots.

Specifically, in the relay mode, in order to expand a beacon coverage in the same network by transmitting the beacon information to terminals in a shadow region that cannot receive the beacon frame transmitted by the management device in the same network, a period, a length, a modulation scheme and a coding scheme of a beacon among the beacon information stored in the beacon frame, a location and a length of a CAP slot among the time slots in the superframe, a location and a length of an MCTA slot among the time slots in the superframe, a location, a length, a modulation scheme and a coding scheme of the CTA slot among the time slots in the superframe, an identification (ID) of a terminal using the CTA slot, and QP information needed for cognitive wireless communication, and the like are re-broadcasted. As described above, the beacon information (hereinafter, referred to as the relay mode beacon information) re-broadcasted in the relay mode is generated by deciphering the beacon and data in the terminal in the same network and re-combining variables for maintaining operations of the network.

The beacon re-broadcaster 220 transmits information on a frequency channel used in the wireless network, a location and a length on the superframe, and the like for each of the time-divided time slots among the beacon information to an external terminal that is not in the same wireless network, during the coexistence mode beacon slot of the echo beacon slots.

In the coexistence mode, the beacon information is transmitted to an adjacent external network to reduce an interference between the adjacent networks in the time domain. In addition, in order to remove redundancy in the frequency domain, among the beacon information stored in the beacon frame, a plurality of a frequency channel using a corresponding network, a period of the beacon, a location of the CAP slot, a location of the MCTA slot, a location and a length of the CTA slot, an ID of a terminal using the CTA slot, a list of backup channels, the QP information, and the like are re-broadcasted. As described above, the beacon information re-broadcasted in the coexistence mode (hereinafter, referred to as the coexistence mode beacon information) is generated by re-combining location information in the time domain in the entire superframe and information needed to perceive a frequency status and a traffic status of the corresponding network.

As described above, due to the re-broadcasting of the beacon information through the echo beacon slots, a time to transmit data can be reduced. This may result in a slight decrease in an efficiency of the network. However, the EBP slot are not allocated to each superframe but periodically allocated to a plurality of superframes, so that the entire efficiency is not significantly decreased.

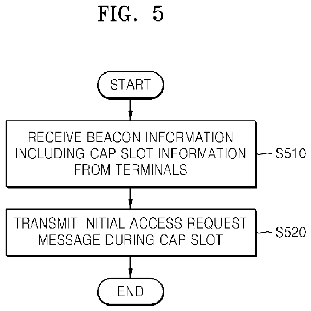

FIG. 5 is a flowchart of an initial access request method used in the wireless network according to the embodiment of the present invention.

First, the beacon information including information on the CAP slot for initial access to the wireless network among the time slots in the superframe is received from a terminal belongs to the wireless network in operation S510. Specifically, among the time slots in the superframe, through the echo beacon slot allocated for beacon re-broadcasting, the beacon information, that is, the echo beacon is received.

During the CAP slot extracted from the beacon information received in operation S510, the initial access request message for requesting an initial access to the wireless network is transmitted in operation S520. The initial access request message may include a media access control (MAC) address of a terminal that is to request the initial access and an amount of data to be transmitted.

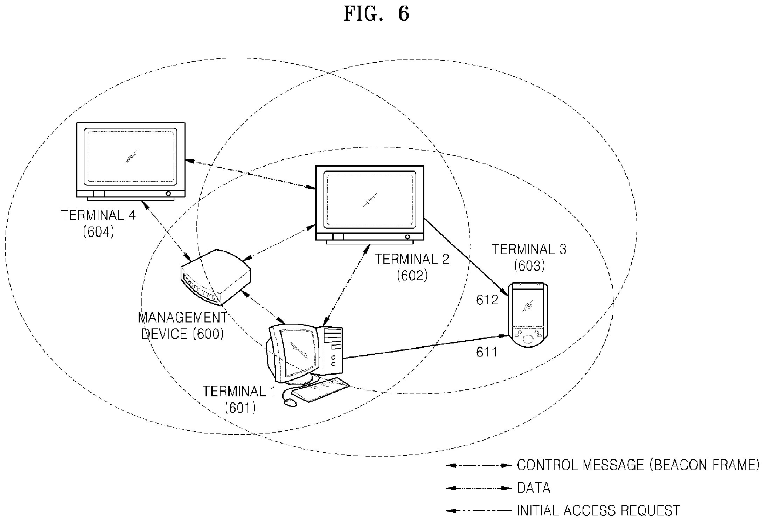

FIG. 6 is a view illustrating a state where a terminal that is outside a transmission range of a management device solves the initial access problem illustrated in FIG. 1 by using the initial access request method illustrated in FIG. 5.

Referring to FIG. 6, a terminal 1 601 and a terminal 2 602 re-broadcast (in the relay mode) beacon information through corresponding EBP slots in the superframe in operations 611 and 612.

A terminal 3 603 is outside a transmission range and cannot receive the beacon frame transmitted from the management device. However, the terminal 3 603 receives the beacon information re-broadcasted from the terminal 1 601 and the terminal 2 602, that is, the echo beacon through different EBP slots twice (operations 611 and 612) and so receive the beacon information outside the transmission range of the management device. Therefore, the terminal 3 603 can extract the CAP slot for initial access from the beacon information and request the initial access through the CAP slot. Therefore, the initial access problem illustrated in FIG. 1 can be solved.

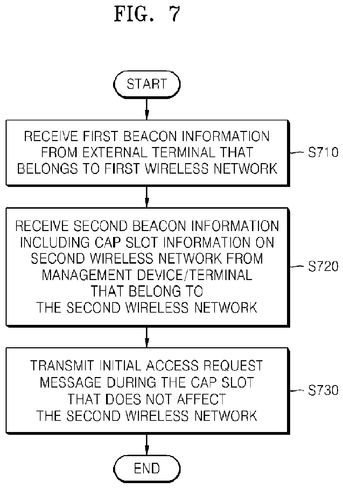

FIG. 7 is a flowchart of an initial access request method used in a wireless network according to another embodiment of the present invention.

First beacon information including information on a CAP slot for initial access to a first wireless network among time slots of a superframe in the first wireless network is received from a terminal that belongs to the first wireless network in operation S710. Specifically, through an echo beacon slot allocated for beacon re-broadcasting among the time slots of the superframe in the first wireless network, the first beacon information (referred to as an echo beacon) is received. The CAP for initial access to the first wireless network can be perceived on the basis of the received first beacon information.

Second beacon information including information on a frequency channel used in a second wireless network and each of time-divided time slots is received from a management device in a second wireless network and one or more terminals that belong to the second wireless network in operation S720. Specifically, a beacon frame transmitted from the management device in the second wireless network and the echo beacon re-broadcasted from the terminals that belong to the second wireless network are received. On the basis of the received second beacon information, time-divided time slots in the second wireless network can be perceived.

By comparing the CAP slot for initial access to the first wireless network perceived in operation S710 with the time slot in the second wireless network perceived in operation S720, the CAP slot in the first wireless network that does not affect the second wireless network is selected to transmit an initial access message to the first wireless network in operation S730. For example, when there are a plurality of CAP slots in the first superframe, only a slot that does not overlap with the time slot of the superframe in the second wireless network is selected from the number of CAP slots.

When a CAP slot in the first wireless network that does not affect the second wireless network is not found, a next beacon frame or echo beacon is received to attempt initial access through a CAP slot of a next superframe.

In operation S730, the initial access request message for requesting initial access to the second wireless network is transmitted during the CAP slot extracted from the second beacon information received in operation S720 When there are a plurality of CAP slots in the superframe, a slot that does not overlap with a time slot of the superframe in the second wireless network from the number of CAP slots to transmit the initial access request message.

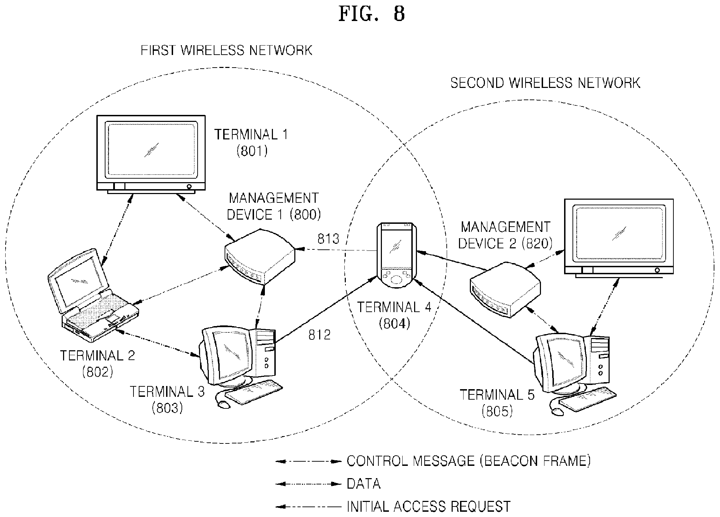

FIG. 8 is a view illustrating a state where a terminal that is in an overlap area between two networks solves the overlap area problem illustrated in FIG. 1B by using the initial access request method.

Referring to FIG. 8, a terminal 3 803 and a terminal 5 805 re-broadcast beacon information in operations 811 and 812.

A terminal 4 804 receives beacon frames transmitted from a management device 1 800 and a management device 2 820 or beacons that do not generate a collision in the time domain from beacon information re-broadcasted from the terminal 3 803 and the terminal 5 805 to receive information on two networks. Thereafter, in operation 813, the terminal 4 804 can request initial access to a first wireless network through a CAP slot in the first wireless network but does not affect a second network to which the management device 2 belongs. Therefore, the overlap area problem illustrated in FIG. 1B can be solved. Although all beacons generate collisions in the time domain, since EBP slots are allocated to different locations of superframes, the continued state in which all of the beacons generate collisions can be avoided.

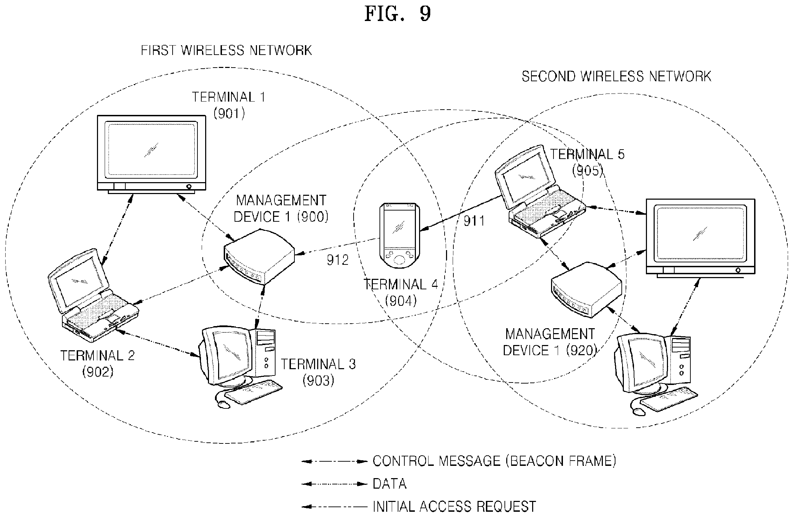

FIG. 9 is a view illustrating a state where a terminal that is adjacent to a terminal that belongs to a different network solves the initial interference problem illustrated in FIG. 1C by using the initial access request method illustrated in FIG. 7.

Referring to FIG. 9, a terminal 5 905 re-broadcasts (in the coexistence mode) beacon information.

A terminal 4 904 may generate an interference with a terminal 5 905 in an adjacent second wireless network and cannot perform transmission.

However, the terminal 4 904 receives beacon information on the adjacent network (the second network) re-broadcasted (in the coexistence mode) from the terminal 5 905 and checks a time slot used by the terminal 5 905 in the adjacent second wireless network, channel information on the adjacent second wireless network, arrangement of a QP, and the like. Thereafter, in operation 912, the terminal 4 904 can request initial access to a first wireless network to which the terminal 4 904 belongs through a CAP slot of the first wireless network that does not generate the interference with the adjacent second wireless network and so does not generate the interference. Therefore, the initial interference problem illustrated in FIG. 1C can be solved.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. In addition, a font ROM data structure according to the present invention can also be embodied as computer readable codes on a computer readable recording medium such as ROM, RAM, CD-ROMs, magnetic tapes, floppy disks, optical data storage devices, and the like.

While the present invention has been particularly shown and described with reference to exemplary embodiments thereof, it will be understood by those skilled in the art that various changes in form and details may be made therein without departing from the scope of the present invention as defined by the appended claims.

## Claims

1. A beacon re-broadcasting apparatus in a wireless network in which a plurality of terminals (801 - 805; 901 - 905) communicate with each other through a superframe (401) including time-divided time slots, comprising:
a beacon frame receiver (210) receiving, from a management device (800; 900) managing the wireless network, a beacon frame including beacon information for communications in the wireless network and information on a plurality of echo beacon slots (403) allocated for beacon re-broadcasting to a plurality of the time slots of the superframe (401), the plurality of the echo beacon slots (403) being separated from each other in the time domain; and
a beacon re-broadcaster (220) rebroadcasting the beacon information during one of the plurality of the echo beacon slots (403),
wherein the plurality of echo beacon slots are allocated by the management device , and the beacon re-broadcaster (220) rebroadcasts the beacon information after extracting the information on the plurality of the echo beacon slots from the beacon frame, and
wherein the plurality of the echo beacon slots (403) include a relay mode beacon slot for re-broadcasting to a neighboring terminal that belongs to the wireless network and a coexistence mode beacon slot for re-broadcasting to an external terminal that does not belong to the wireless network.

2. The apparatus of claim 1, wherein the beacon re-broadcaster (220) transmits relay mode beacon information including information on a location and a length on the superframe (401), a modulation scheme, a coding scheme, and an allocated terminal for each of the time-divided time slots among the beacon information, to the neighboring terminal that belongs to the wireless network, during the relay mode beacon slot.

3. The apparatus of claim 1, wherein the beacon re-broadcaster (220) transmits coexistence mode beacon information on a frequency channel used in the wireless network, and a location and a length on the superframe (401) for each of the time-divided time slots used in the wireless network, among the beacon information, to the external terminal that does not belong to the wireless network, during the coexistence mode beacon slot.

4. The apparatus of claim 1, wherein the time slots of the superframe (401) include one or more of a channel time allocation, CTA, slot (407) for communications between the number of terminals (801 - 804; 901 - 904), a management channel time allocation, MCTA, slot (406) for transmission/reception of control information between the management device (800; 900) and the terminals (801 - 804; 901 - 904), a contention access period, CAP, slot (405) for initial access to the wireless network, a quiet period, QP, slot (404) for scanning a signal of an incumbent user, IU, in the cognitive radio technology.

5. The apparatus of claim 4, wherein the CAP slot (405) is divided from the time slots so as to be operated.

6. A beacon re-broadcasting method in a wireless network in which a plurality of terminals communicate with each other through a superframe including time-divided time slots, comprising:
a beacon frame reception operation (S310) of receiving, from a management device managing the wireless network, a beacon frame including beacon information for communications in the wireless network and information on a plurality of echo beacon slots allocated for beacon re-broadcasting to a plurality of the time slots of the superframe, the plurality of the echo beacon slots being separated from each other in the time domain; and
a beacon re-broadcasting operation (S320) of rebroadcasting the beacon information during the echo beacon slot,
wherein the plurality of echo beacon slots are allocated by the management device, and the beacon re-broadcaster (220) rebroadcasts the beacon information after extracting the information on the plurality of the echo beacon slots from the beacon frame, and
wherein the echo beacon slot includes a relay mode beacon slot for re-broadcasting to a neighboring terminal that belongs to the wireless network and a coexistence mode beacon slot for re-broadcasting to an external terminal that does not belong to the wireless network.

7. The method of claim 6, wherein the beacon re-broadcasting operation (S320) includes transmitting relay mode beacon information including information on a location and a length on the superframe, a modulation scheme, a coding scheme, and an allocated terminal for each of the time-divided time slots among the beacon information, to the neighboring terminal that belongs to the wireless network, during the relay mode beacon slot.

8. The method of claim 6, wherein the beacon re-broadcasting operation (S320) includes transmitting coexistence mode beacon information on a frequency channel used in the wireless network, and a location and a length for the superframe of each of the time-divided time slots used in the wireless network, among the beacon information, to the external terminal that does not belong to the wireless network, during the coexistence mode beacon slot.

9. The method of claim 6, wherein the time slots of the superframe include one or more of a channel time allocation, CTA, slot for communications between the number of terminals, a management channel time allocation, MCTA, slot for transmission/reception of control information between the management device and the terminals, a contention access period, CAP, slot for initial access to the wireless network, a quiet period, QP, slot for scanning a signal of an incumbent user, IU, in the cognitive radio technology.

10. The method of claim 9, wherein the CAP slot is divided from the time slots so as to be operated.

## Patentansprüche

1. Baken-Neurundsendevorrichtung in einem drahtlosen Netz, in dem mehrere Endgeräte (801-805; 901-905) miteinander über einen Superrahmen (401), der zeitmultiplexierte Zeitschlitze enthält, kommunizieren, die Folgendes umfasst:
einen Bakenrahmen-Empfänger (210), der von einer Managementvorrichtung (800; 900), die das drahtlose Netz managt, einen Bakenrahmen empfängt, der Bakeninformationen für die Kommunikation in dem drahtlosen Netz und Informationen über mehrere Echo-Bakenschlitze (403), die für das erneute Rundsenden von Baken mehreren Zeitschlitzen des Superrahmens (401) zugewiesen sind, enthält, wobei die mehreren Echo-Bakenschlitze (403) im Zeitbereich voneinander getrennt sind; und
eine Baken-Neurundsendeeinrichtung (220), die die Bakeninformationen während eines der mehreren Echo-Bakenschlitze (403) erneut rundsendet,
wobei die mehreren Echo-Bakenschlitze durch die Managementvorrichtung zugewiesen werden und wobei die Baken-Neurundsendeeinrichtung (220) die Bakeninformationen erneut rundsendet, nachdem die Informationen über die mehreren Echo-Bakenschlitze aus dem Bakenrahmen extrahiert worden sind, und
wobei die mehreren Echo-Bakenschlitze (403) einen Weiterleitungsmodus-Bakenschlitz zum erneuten Rundsenden zu einem benachbarten Endgerät, das zu dem drahtlosen Netz gehört, und einen Koexistenzmodus-Bakenschlitz zum erneuten Rundsenden zu einem externen Endgerät, das nicht zu dem drahtlosen Netz gehört, enthalten.

2. Vorrichtung nach Anspruch 1, wobei die Baken-Neurundsendeeinrichtung (220) während des Weiterleitungsmodus-Bakenschlitzes Weiterleitungsmodus-Bakeninformationen sendet, die Informationen über einen Ort und eine Länge des Superrahmens (401), ein Modulationsschema, ein Codierungsschema und ein zugeordnetes Endgerät für jeden der zeitmultiplexierten Zeitschlitze, die in dem drahtlosen Netz verwendet werden, enthalten.

3. Vorrichtung nach Anspruch 1, wobei die Baken-Neurundsendeeinrichtung (220) während des Koexistenzmodus-Bakenschlitzes aus den Bakeninformationen Koexistenzmodus-Bakeninformationen über einen Frequenzkanal, der in dem drahtlosen Netz verwendet wird, und einen Ort und eine Länge des Superrahmens (401) für jeden der zeitmultiplexierten Zeitschlitze, die in dem drahtlosen Netz verwendet werden, an das externe Endgerät, das nicht zu dem drahtlosen Netz gehört, sendet.

4. Vorrichtung nach Anspruch 1, wobei die Zeitschlitze des Superrahmens (401) einen Kanalzeitzuweisungs-Schlitz, CTA-Schlitz, (407) für die Kommunikation zwischen der Anzahl von Endgeräten (801-805; 901-905) und/oder einen Managementkanalzeitzuweisungs-Schlitz, MCTA-Schlitz, (406) zum Senden/Empfangen von Steuerinformationen zwischen der Managementvorrichtung (800; 900) und den Endgeräten (801-805; 901-905) und/oder einen Konkurrenzzugriffsperioden-Schlitz, CAP-Schlitz, (405) für den anfänglichen Zugriff auf das drahtlose Netz und/oder einen Ruheperioden-Schlitz, QP-Schlitz, (404) zum Abtasten eines Signals eines vorherrschenden Anwenders, IU, in der kognitiven Funktechnologie enthalten.

5. Vorrichtung nach Anspruch 4, wobei der CAP-Schlitz (405) von den Zeitschlitzen abgeteilt ist, um verwendet zu werden.

6. Baken-Neurundsendeverfahren in einem drahtlosen Netz, in dem mehrere Endgeräte über einen Superrahmen, der zeitmultiplexierte Zeitschlitze enthält, miteinander kommunizieren, das Folgendes umfasst:
eine Bakenrahmen-Empfangsoperation (S310), um von einer Managementvorrichtung, die das drahtlose Netz managt, einen Bakenrahmen zu empfangen, der Bakeninformationen für die Kommunikation in dem drahtlosen Netz und Informationen über mehrere Echo-Bakenschlitze, die für ein erneutes Rundsenden von Baken mehreren Zeitschlitzen des Superrahmens zugeordnet sind, enthält, wobei die mehreren Echo-Bakenschlitze im Zeitbereich voneinander getrennt sind; und
eine Baken-Neurundsendeoperation (S320), um während des Echo-Bakenschlitzes Bakeninformationen erneut rundzusenden,
wobei die mehreren Echo-Bakenschlitze durch die Managementvorrichtung zugewiesen werden und die Baken-Neurundsendeeinrichtung (220) die Bakeninformationen erneut rundsendet, nachdem die Informationen über die mehreren Echo-Bakenschlitze aus dem Bakenrahmen extrahiert worden sind, und
wobei der Echo-Bakenschlitz einen Weiterleitungsmodus-Bakenschlitz zum erneuten Rundsenden zu einem benachbarten Endgerät, das zu dem drahtlosen Netz gehört, und einen Koexistenzmodus-Bakenschlitz zum erneuten Rundsenden zu einem externen Endgerät, das nicht zu dem drahtlosen Netz gehört, enthält.

7. Verfahren nach Anspruch 6, wobei die Baken-Neurundsendeoperation (S320) während des Weiterleitungsmodus-Bakenschlitzes das Senden aus den Bakeninformationen von Weiterleitungsmodus-Bakeninformationen, die Informationen über einen Ort und eine Länge des Superrahmens, ein Modulationsschema, ein Codierungsschema und ein zugeordnetes Endgerät für jeden der zeitmultiplexierten Zeitschlitze enthalten, zu dem benachbarten Endgerät, das zu dem drahtlosen Netz gehört, umfasst.

8. Verfahren nach Anspruch 6, wobei die Baken-Neurundsendeoperation (S320) während des Koexistenzmodus-Bakenschlitzes das Senden aus den Bakeninformationen von Koexistenzmodus-Bakeninformationen über einen Frequenzkanal, der in dem drahtlosen Netz verwendet wird, und einen Ort und eine Länge für den Superrahmen jedes der zeitmultiplexierten Zeitschlitze, die in dem drahtlosen Netz verwendet werden, enthält, zu dem externen Endgerät, das nicht zu dem drahtlosen Netz gehört.

9. Verfahren nach Anspruch 6, wobei die Zeitschlitze des Superrahmens einen Kanalzeitzuweisungs-Schlitz, CTA-Schlitz, für die Kommunikation zwischen der Anzahl von Endgeräten (801-805; 901-905) und/oder einen Managementkanalzeitzuweisungs-Schlitz, MCTA-Schlitz, zum Senden/Empfangen von Steuerinformationen zwischen der Managementvorrichtung und den Endgeräten und/oder einen Konkurrenzzugriffsperioden-Schlitz, CAP-Schlitz, für den anfänglichen Zugriff auf das drahtlose Netz und/oder einen Ruheperiodenschlitz, QP-Schlitz, zum Abtasten eines Signals eines vorherrschenden Anwenders, IU, in der kognitiven Funktechnologie enthalten.

10. Verfahren nach Anspruch 9, wobei der CAP-Schlitz von den Zeitschlitzen abgeteilt wird, um verwendet zu werden.

## Revendications

1. Appareil de rediffusion par balise dans un réseau sans fil dans lequel une pluralité de terminaux (801-805; 901-905) communiquent entre eux par l'intermédiaire d'une supertrame (401) contenant des tranches horaires divisées dans le temps, comprenant:
un récepteur de trame de balise (210) recevant, à partir d'un dispositif de gestion (800; 900) gérant le réseau sans fil, une trame de balise comprenant des informations de balise pour les communications dans le réseau sans fil et des informations sur une pluralité de tranches horaires de balise d'écho (403) affectées à la rediffusion par balise à une pluralité des tranches horaires de la supertrame (401), la pluralité des tranches de balise d'écho (403) étant séparée les unes des autres dans le domaine du temps ; et
un rediffuseur de balise (220) rediffusant les informations de balise pendant l'un de la pluralité des tranches de balise d'écho (403),
dans laquelle la pluralité d'emplacements de balise à écho sont attribués par le dispositif de gestion, et le rediffuseur de balise (220) retransmet les informations de balise après extraction des informations sur la pluralité des tranches de balise à écho à partir de la trame de balise, et
dans laquelle la pluralité des tranches de balise écho (403) comprend une tranche de balise de mode relais pour la rediffusion vers un terminal voisin qui appartient au réseau sans fil et une tranche de balise de mode coexistence pour la rediffusion vers un terminal externe qui n'appartient pas au réseau sans fil.

2. Appareil selon la revendication 1, dans lequel le rediffuseur de balise (220) transmet des informations de balise de mode relais, contenant des informations sur une tranche et une longueur sur la supertrame (401), un schéma de modulation, un schéma de codage et un terminal affecté pour chacun des tranches horaires divisées dans le temps parmi les informations de balise, au terminal voisin qui appartient au réseau radio, durant la tranche de balise de mode relais.

3. Appareil selon la revendication 1, dans lequel le rediffuseur de balise (220) transmet des informations de balise de mode de coexistence sur un canal de fréquence utilisé dans le réseau sans fil, et un emplacement et une longueur sur la supertrame (401) pour chacune des tranches horaires divisées dans le temps utilisées dans le réseau sans fil, parmi les informations de balise, au terminal externe qui n'appartient pas au réseau sans fil, pendant la tranche de balise de mode de coexistence.

4. Appareil selon la revendication 1, dans lequel les tranches horaires de la supertrame (401) comprennent un ou plusieurs éléments parmi une allocation de temps de canal, CTA, une tranche (407) pour les communications entre le nombre de terminaux (801 - 804 ; 901 - 904), une allocation de temps de canal de gestion, MCTA, une tranche (406) pour transmission/réception des informations de commande entre le dispositif de gestion (800 ; 900) et les terminaux (801 - 804 ; 901 - 904), une période d'accès de contestation, CAP, une tranche (405) pour l'accès initial au réseau sans fil, une période de silence, QP, une tranche (404) pour balayer un signal d'un utilisateur titulaire, IU, dans la technologie de radio cognitive.

5. Dispositif selon la revendication 4, dans lequel la tranche CAP (405) est séparée des tranches horaires de temps de manière à être exploitée.

6. Procédé de rediffusion par balise dans un réseau sans fil dans lequel une pluralité de terminaux communique entre eux par l'intermédiaire d'une supertrame contenant des tranches horaires divisées dans le temps, comprenant:
le fonctionnement d'un récepteur de trame de balise (S310) recevant, à partir d'un dispositif de gestion gérant le réseau sans fil, une trame de balise comprenant des informations de balise pour les communications dans le réseau sans fil et des informations sur une pluralité de tranches de balise d'écho affectés à la rediffusion par balise à une pluralité des tranches horaires de la supertrame, la pluralité des tranches de balise d'écho (403) étant séparée les unes des autres dans le domaine du temps; et
le fonctionnement du rediffuseur de balise (S320) rediffusant les informations de balise pendant l'un de la pluralité des tranches de balise d'écho,
dans laquelle la pluralité d'emplacements de balise à écho sont attribués par le dispositif de gestion, et le rediffuseur de balise (220) retransmet les informations de balise après extraction des informations sur la pluralité des emplacements de balise à écho à partir de la trame de balise, et
dans laquelle la pluralité des tranches de balise écho comprend un emplacement de balise de mode relais pour la rediffusion vers un terminal voisin qui appartient au réseau sans fil et un tranche de balise de mode coexistence pour la rediffusion vers un terminal externe qui n'appartient pas au réseau sans fil.

7. Procédé selon la revendication 6, dans lequel le fonctionnement du rediffuseur de balise (220) transmet des informations de balise de mode relais, contenant des informations sur un emplacement et une longueur sur la supertrame (401), un schéma de modulation, un schéma de codage et un terminal affecté pour chacune des tranches horaires divisées dans le temps parmi les informations de balise, au terminal voisin qui appartient au réseau radio, durant l'intervalle de balise de mode relais.

8. Procédé selon la revendication 6, dans lequel le fonctionnement du rediffuseur de balise (S320) transmet des informations de balise de mode de coexistence sur un canal de fréquence utilisé dans le réseau sans fil, et un emplacement et une longueur sur la supertrame (401) pour chacune des tranches horaires divisées dans le temps utilisées dans le réseau sans fil, parmi les informations de balise, au terminal externe qui n'appartient pas au réseau sans fil, pendant l'intervalle de balise de mode de coexistence.

9. Procédé selon la revendication 1, dans lequel les tranches horaires de la supertrame comprennent un ou plusieurs éléments parmi une allocation de temps de canal, CTA, une tranche pour les communications entre le nombre de terminaux, une allocation de temps de canal de gestion, MCTA, une tranche pour la transmission/réception des informations de commande entre le dispositif de gestion et les terminaux, une période d'accès de contestation, CAP, une tranche pour l'accès initial au réseau sans fil, une période de silence, QP, une tranche pour balayer un signal d'un utilisateur titulaire, IU, dans la technologie de radio cognitive.

10. Dispositif selon la revendication 9, dans lequel la tranche CAP est séparée des tranches horaires de temps de manière à être exploitée.
